# EUROPÄISCHE PATENTANMELDUNG

(11) **EP 2 628 944 A1**
(43) Veröffentlichungstag der Anmeldung: **21.08.2013**
(21) Anmeldenummer: 12156265.6
(22) Anmeldetag: 20.02.2012
(51) Int. Cl.: F02N 11/08

(54) **Vorrichtung zur Spannungseinbruch-Stabilisierung in einem Kraftfahrzeug**

(71) Anmelder: Flextronics International Kft., Tab 8660 (HU)
(72) Erfinder: Sierak, Thaddäus, 86169 Augsburg (DE)
(74) Vertreter: Rupprecht, Kay

(57) **Zusammenfassung**

Es wird eine Vorrichtung (1) zur Spannungseinbruch-Stabilisierung in einem Kraftfahrzeug vorgeschlagen, aufweisend:
- einen ersten Anschluss (3) zur Verbindung der Vorrichtung (1) mit einer Energiequelle, insbesondere mit einer Fahrzeugbatterie (B);
- einen zweiten Anschluss (5) zur Verbindung der Vorrichtung (1) mit einer Startvorrichtung (S) eines Kraftfahrzeugs;
- ein Strombegrenzungsmodul (4) zur Begrenzung eines Starterstroms;
- eine Steuereinheit (9) zur Ansteuerung des Strombegrenzungsmoduls (4), und
- mindestens einen mit der Steuereinheit (9) verbundenen
Startvorgangdetektor (17) zur Erkennung eines Startvorgangs, wobei die Steuereinheit (9) aufgrund eines Startvorgangsignals des Startvorgangdetektors (17) das Strombegrenzungsmodul (4) veranlasst, eine Starterstrombegrenzungsmaßnahme durchzuführen.

## Beschreibung

Die Erfindung betrifft eine Vorrichtung zur Spannungseinbruch-Stabilisierung in einem Kraftfahrzeug gemäß dem Oberbegriff des Anspruchs 1 sowie ein Kraftfahrzeug aufweisend eine erfindungsgemäße Vorrichtung gemäß dem Oberbegriff des Anspruchs 12.

Vorrichtungen zur Stabilisierung eines Kraftfahrzeug-Bordnetzes sind grundsätzlich bekannt. Bei einem Startvorgang in einem Kraftfahrzeug besteht grundsätzlich die Problematik, dass der Starter des Kraftfahrzeugs einen hohen Strom benötigt, den er der Fahrzeugbatterie entnimmt. Die hohe Stromentnahme durch den Starter führt zu Spannungseinbrüchen an den Batterieklemmen, was zu einem Spannungseinbruch im gesamten Bordnetz führt. Sämtliche elektronische Komponenten und Geräte des Kraftfahrzeugs sind folglich von einem solchen Spannungseinbruch betroffen. Die Tiefe eines Spannungseinbruchs, die sämtliche am Bordnetz angeschlossenen Komponenten und Geräte ohne Funktionsstörungen und unbeschädigt überstehen müssen, wird von den Herstellern der jeweiligen Komponenten festgelegt. Aus verschiedenen Gründen, beispielsweise durch eine schwach geladene, eine beschädigte oder eine alte Batterie, kann es jedoch zu noch tieferen als durch die Hersteller spezifizierten Spannungseinbrüchen an den Batterieklemmen kommen. Derart tiefe Spannungseinbrüche können zu Funktionsstörungen bis hin zur Beschädigung der am Bordnetz angeschlossenen Komponenten und Geräte führen. Daher ist es in jedem Fall erforderlich, eine Spannungsbegrenzung an den Batterieklemmen so vorzusehen bzw. den Starterstrom so zu begrenzen, dass die Spannung an den Batterieklemmen nicht unter einen vorgegebenen Schwellenwert sinken kann.

Bekannte Methoden zur Spannungsbegrenzung können im Wesentlichen in passive und aktive Methoden unterteilt werden. Passive Methoden zur Spannungsbegrenzung nutzen Widerstände, welche zwischen die Batterie und den Starter eingebracht werden, um den Starterstrom zu begrenzen. Derartige passive Methoden sind besonders einfach realisierbar, verursachen jedoch hohe Energieverluste und sind relativ unflexibel, weil sie auf einen bestimmten Batterietyp abgestimmt werden müssen und folglich bei einem Wechsel der Batterie neu definiert und ausgetauscht werden müssen. Aktive Methoden zur Spannungsbegrenzung nutzen üblicherweise eine Pulsweitenmodulation (PWM) in Kombination mit Widerständen, Halbleitern und/oder anderen Komponenten.

Unabhängig von der Art der Spannungseinbruch-Begrenzungsmethode, wird bei den bekannten Vorrichtungen eine Spannungseinbruch-Begrenzungsmaßnahme erst dann eingeleitet, wenn im Bordnetz ein Spannungseinbruch detektiert wurde. Die den Spannungseinbruch detektierende Vorrichtung sendet dann ein entsprechendes Steuersignal an eine Vorrichtung zur Stabilisierung des Kraftfahrzeug-Bordnetzes, die infolgedessen eine geeignete Maßnahme zur Spannungseinbruchbegrenzung einleitet. Diese Maßnahme besteht beispielsweise in der Begrenzung des Starterstroms und/oder der Zuschaltung einer zusätzlichen Energiequelle.

Nachteilig an den bekannten Vorrichtungen ist es folglich, dass erst nach der Detektion eines Spannungseinbruchs im Bordnetz, d.h. erst im Fehlerfall, dem Spannungseinbruch aktiv entgegengewirkt wird. Es muss folglich erst ein Steuersignal aufgrund eines Spannungseinbruchs generiert werden, um die Überwachung der Batteriespannung zu aktivieren und den bereits erfolgten Spannungseinbruch nachträglich noch zu begrenzen. Zwischen einem Spannungseinbruch im Bordnetz und der Aktivierung der Spannungseinbruch-Begrenzungsmaßnahme kann somit unter Umständen eine Zeitspanne liegen, die möglicherweise bereits ausreicht, um eine Beschädigung von Komponenten und Geräten aufgrund des Spannungseinbruchs hervorzurufen.

Aufgabe der vorliegenden Erfindung ist es daher, eine Vorrichtung zur Stabilisierung eines Kraftfahrzeug-Bordnetzes während eines Startvorgangs zu schaffen, die einen Spannungseinbruch ohne die Notwendigkeit eines externen Steuersignals automatisch erkennt und eine geeignete Spannungsbegrenzungsmaßnahme unmittelbar, d.h. ohne eine zeitliche Verzögerung einleitet.

Zur Lösung der oben genannten Aufgabe wird eine Vorrichtung zur Stabilisierung eines Kraftfahrzeug-Bordnetzes während eines Startvorganges mit den Merkmalen des Anspruchs 1 vorgeschlagen.

Die Vorrichtung zur Spannungseinbruch-Stabilisierung in einem Kraftfahrzeug, weist gemäß der Erfindung folgendes auf: einen ersten Anschluss zur Verbindung der Vorrichtung mit einer Energiequelle, insbesondere mit einer Fahrzeugbatterie; einen zweiten Anschluss zur Verbindung der Vorrichtung mit einer Startvorrichtung eines Kraftfahrzeugs; ein Strombegrenzungsmodul zur Begrenzung eines Starterstroms; eine Steuereinheit zur Ansteuerung des Strombegrenzungsmoduls, und mindestens einen mit der Steuereinheit verbundenen Startvorgangdetektor zur Erkennung eines Startvorgangs, wobei die Steuereinheit aufgrund eines Startvorgangsignals des Startvorgangdetektors das Strombegrenzungsmodul veranlasst, eine Starterstrombegrenzungsmaßnahme durchzuführen.

Ein wesentlicher Punkt der Erfindung liegt also darin, dass eine Spannungsbegrenzungsmaßnahme nicht erst dann eingeleitet wird, wenn der Spannungseinbruch im Bordnetz bereits erfolgt ist, sondern ein Spannungseinbruch wird von vornherein vermieden oder zumindest auf einen akzeptablen Wert begrenzt. Dies wird erfindungsgemäß dadurch bewerkstelligt, dass nicht ein detektierter Spannungseinbruch die Spannungsbegrenzungsmaßnahme auslöst, sondern ein detektierter Startvorgang. Auf diese Weise wird ein Spannungseinbruch im Bordnetz von Anfang an begrenzt, da die Spannung an den Batterieklemmen zu jedem Zeitpunkt unmittelbar bei der Detektion eines Startvorgangs stabilisiert wird und nicht erst dann, wenn es zu spät ist, d.h. bereits ein gravierender Spannungseinbruch im Bordnetz vorliegt. Durch den Startvorgangdetektor wird ein Startvorgang automatisch erkannt und unmittelbar und ohne Zeitverzögerung eine entsprechende Spannungseinbruch-Begrenzungsmaßnahme durch die Steuereinheit eingeleitet. Die eingeleitete Spannungseinbruch-Begrenzungsmaßnahme begrenzt insbesondere der Starterstrom und/oder schaltet eine zusätzliche Energiequelle zu, so dass die Batterieklemmenspannung nicht unterhalb eines bestimmten Schwellenwerts absinken kann.

Vorteilhafter Weise kann die erfindungsgemäße Vorrichtung unmittelbar an die Fahrzeugbatterie angeschlossen werden, jedoch ist auch eine Montage am Starter denkbar. Durch die besondere Ausbildung der Vorrichtung als kompaktes Modul sind darüber hinaus lediglich drei Anschlüsse notwendig, da auf die Zuführung eines externen Steuersignals oder einer externen Energieversorgung verzichtet werden kann. Die Vorrichtung bildet somit ein autarkes System, welches sämtliche erforderliche Komponenten zur Verhinderung eines Spannungseinbruchs im Bordnetz umfasst. Dadurch, dass die Vorrichtung zwischen die Fahrzeugbatterie und den Starter schaltbar ist, kann ein Startvorgang unmittelbar, d.h. ohne Zeitverzögerung, automatisch erkannt werden und eine entsprechende Gegenmaßnahme kann umgehend eingeleitet werden. Durch die vorliegende Erfindung kann somit durch ein besonders rasches Einleiten von Spannungseinbruch-Begrenzungsmaßnahmen (nämlich bevor es zu einem Spannungseinbruch kommt) die Fahrzeugelektronik wesentlich geschont werden.

Im Gegensatz zu den bekannten Bordnetzstabilisierungssystemen sind bei der vorliegenden Erfindung lediglich Anschlüsse für die Verbindung der erfindungsgemäßen Vorrichtung mit der Batterie und dem Starter sowie ein Masseanschluss notwendig. Im Gegensatz dazu benötigen bekannte Systeme eine erhebliche Anzahl an Kabeln, beispielsweise für die Zuführung eines externen Steuersignals, welches einen Spannungseinbruch im Bordnetz signalisiert.

Darüber hinaus kann vorgesehen sein, dass die Vorrichtung zur Stabilisierung eines Kraftfahrzeug-Bordnetzes zusätzlich einen Spannungssensor zur Erkennung des Spannungsniveaus der Batterie aufweist. Der Spannungssensor kann sowohl permanent als auch nach Bedarf zugeschaltet werden und das jeweilige Spannungsniveau der Fahrzeugbatterie detektieren. Insbesondere ist der Spannungssensor geeignet festzustellen, ob die Batterie die typische Spannung einer Fahrzeugbatterie mit etwa 11 bis 14 Volt (V) aufweist oder ob ein Jump Start mit erhöhter Spannung etwa bis zu 28 V vorliegt. Weiterhin weist die Vorrichtung zur Stabilisierung eines Kraftfahrzeug-Bordnetzes vorzugsweise einen Versorgungsspannungsgenerator zur Spannungsversorgung der Vorrichtungskomponenten auf. Der Versorgungsspannungsgenerator erzeugt aus der Batteriespannung sämtliche für die korrekte Funktion der erfindungsgemäßen Vorrichtung notwendigen Spannungen. Er ist vorzugsweise so ausgelegt, dass sogar sehr tiefe Spannungseinbrüche ausgeglichen werden können. Der Versorgungsspannungsgenerator ist vorzugsweise als elektronische Schaltung ausgebildet, die sowohl linear als auch getaktet arbeiten kann. Es versteht sich, dass jede andere geeignete Schaltung als Versorgungsspannungsgenerator zum Einsatz kommen kann.

Vorzugsweise weist die erfindungsgemäße Vorrichtung noch eine mit der Steuereinheit verbundene Diagnoserückmeldungseinheit zur Erkennung eines Kurzschlusses und/oder einer Unterbrechung der Starterleitung auf. Die Diagnose der Starterleitung kann (und wird üblicherweise) durch Auswertung des Spannungssensors von der Steuerung durchgeführt werden. Die Diagnoserückmeldungseinheit dient also quasi zur Übermittlung der von der Steuerung empfangenen Diagnoseergebnisse. Die Diagnoserückmeldungseinheit kann darüber hinaus zur Erkennung des Startvorgangs ausgebildet sein.

Wie oben angedeutet, leitet die Steuereinheit sofort nach der Detektierung eines Startvorgangs eine Spannungseinbruch-Begrenzungsmaßnahme ein. Diese Spannungseinbruch-Begrenzungsmaßnahme kann wie eingangs erläutert passiver oder aktiver Natur sein. Eine passive Begrenzung des Starterstroms wird grundsätzlich durch die Zuschaltung eines Widerstands erreicht, während eine aktive Begrenzung des Starterstroms durch die Regelung des Starterstroms aktiv bewerkstelligt wird. Im Fall einer passiven Ausgangsstrombegrenzung, d.h. einer passiven Begrenzung des Starterstroms, kann ein Stromsensor vorgesehen sein, der mit dem Batterieleitungsabschnitt oder dem Starterleitungsabschnitt in Verbindung steht. Die durch den Stromsensor erfassten Messsignale können dann als zusätzliche Informationen der Steuereinheit zugeführt werden. Bei einer aktiven Begrenzung des Starterstroms ist ein solcher Stromsensor jedoch zwingend notwendig, um eine aktive Regelung des Starterstroms bzw. des Ausgangsstroms zu ermöglichen. Sofern eine passive Regelung des Ausgangs- bzw. Starterstroms vorgesehen ist, kann es ausreichend sein, einen Widerstand zur Starterstrombegrenzung zwischen dem ersten Anschluss und dem zweiten Anschluss der erfindungsgemäßen Vorrichtung schaltbar anzuordnen. Wenn der Spannungssensor einen Startvorgang detektiert, kann die Steuereinheit unmittelbar den Widerstand zwischen den ersten und den zweiten Anschluss schalten und auf diese Weise den von dem Starter beanspruchten Strom (Starterstrom) begrenzen.

Zur Lösung der oben genannten Aufgabe wird auch ein Kraftfahrzeug mit einer erfindungsgemäßen Vorrichtung zur Stabilisierung eines Kraftfahrzeug-Bordnetzes während eines Startvorgangs gemäß Anspruch 12 vorgeschlagen. Bei einem derartigen Kraftfahrzeug ist vorzugsweise vorgesehen, dass die Vorrichtung zwischen die Fahrzeugbatterie und die Startervorrichtung geschaltet ist.

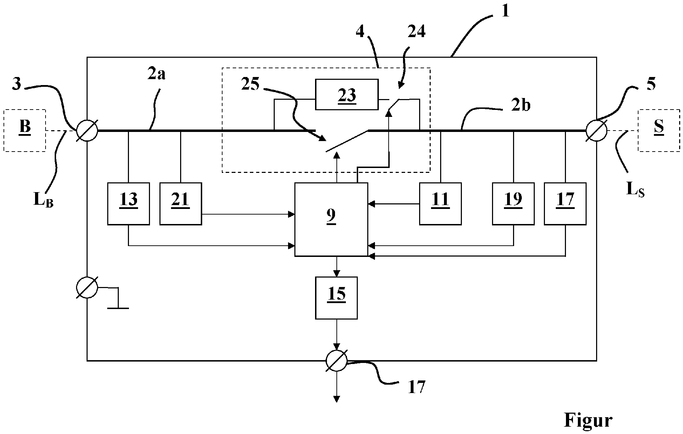

Die Erfindung wird im Folgenden anhand der einzigen Figur näher erläutert.

Die Figur zeigt ein schematisches Schaltbild einer Vorrichtung 1 zur Stabilisierung eines Kraftfahrzeug-Bordnetzes während eines Startvorgangs gemäß der Erfindung. Sie weist einen ersten Anschluss 3 auf, der über eine Leitung L_{B} mit einer Energiequelle und insbesondere mit der Fahrzeugbatterie B eines Kraftfahrzeugs verbindbar bzw. verbunden ist. Weiterhin weist die Vorrichtung 1 einen zweiten Anschluss 5 zur Verbindung der Vorrichtung 1 mit einem Starter bzw. einer Startvorrichtung S des Kraftfahrzeugs über eine Leitung L_{S} auf. Die Fahrzeugbatterie B speist sowohl den Starter S als auch andere Komponenten und Geräte des Kraftfahrzeug-Bordnetzes. Mit dem ersten Anschluss 3 steht ein Batterieleitungsabschnitt 2a der Vorrichtung 1 in Verbindung, während mit dem zweiten Anschluss 5 ein Starterleitungsabschnitt 2b der Vorrichtung 1 verbunden ist. Der Batterieleitungsabschnitt 2a und der Starterleitungsabschnitt 2b sind über ein Strombegrenzungsmodul 4 miteinander verbunden, welches somit in Serie zwischen den ersten Anschluss 3 und den zweiten Anschluss 5 geschaltet ist.

Die Vorrichtung 1 kann als eine in einem Gehäuse untergebrachte kompakte und separate Einheit ausgebildet sein, die beispielsweise auf einer Leiterplatte (PCB) angeordnet sein kann. Die Vorrichtung 1 kann dann mittels der Anschlüsse 3 und 5 über die Leitungen L_{B} und L_{S} mit der Batterie B bzw. mit dem Starter S verbunden werden. Grundsätzlich kann die Vorrichtung 1 überall im Kraftfahrzeug angeordnet sein. Denkbar ist beispielsweise eine Unterbringung im Kofferraum, beispielsweise wenn sich die Kraftfahrzeugbatterie dort befindet. Die Vorrichtung 1 kann unmittelbar an der Batterie B befestigt werden, denkbar ist aber auch eine starre Montage auf dem Starter S. Das Gehäuse der Vorrichtung 1 kann zumindest teilweise aus Kunststoff ausgebildet sein. Da die Vorrichtung 1 zeitweise hohe Ströme führt, ist vorzugsweise eine geeignete Kühlungsvorrichtung, insbesondere in Form einer wärmeleitenden Masse, insbesondere einer Metallplatte oder dergleichen, vorgesehen.

Die Vorrichtung 1 weist erfindungsgemäß einen Startvorgangsdetektor 17 auf, der einen Startvorgang, insbesondere durch Erfassen der Spannung oder des Stroms in der Vorrichtung 1, oder auf sonstige geeignete Weise, detektiert. Hierzu ist der Startvorgangsdetektor 17 an den Starterleitungsabschnitt 2b (wie in der Figur gezeigt) bzw. alternativ oder auch zusätzlich an den Batterieleitungsabschnitt 2a der Vorrichtung 1 angeschlossen. Der Startvorgangsdetektor 17 erfasst also zur Detektion eines Startvorgangs beispielsweise den Stromfluss auf dem Starterleitungsabschnitt 2b und/oder auf dem Batterieleitungsabschnitt 2a oder entsprechende Spannungen. Der Startvorgangsdetektor 17 steht mit einer Steuereinheit 9 in Verbindungen und signalisiert dieser einen Startvorgang. Die Steuereinheit 9 wirkt wiederum mit dem Strombegrenzungsmodul 4 zusammen, so dass im Falle eines durch den Startvorgangsdetektor 17 detektierten Startvorgangs das Strombegrenzungsmodul 4 durch die Steuereinheit 9 aktiviert wird.

Weiterhin kann die Vorrichtung 1 zusätzliche Schaltungselemente aufweisen, wie beispielsweise einen Spannungssensor 11, einen Stromsensor 19 und eine Diagnoserückmeldungseinheit 15. Der Spannungssensor 11 und der Stromsensor 19 sind einerseits mit dem Starterleitungsabschnitt 2b (wie in der Figur gezeigt) oder alternativ mit dem Batterieleitungsabschnitt 2a und andererseits mit der Steuereinheit 9 verbunden und erfüllen diverse Zusatzfunktionen. Beispielsweise kann der Spannungssensor 11 als einfacher Spannungsteiler, insbesondere auch zuschaltbar, ausgebildet sein. Somit kann vorgesehen sein, dass nicht nur der Spannungssensor 11 ein Signal an die Steuereinheit 9 liefert, sondern es kann auch vorgesehen sein, dass die Steuereinheit 9 den Spannungssensor 11 ansteuert, um zusätzliche Schaltelemente wie Transistoren, insbesondere MOSFETs, oder dergleichen zuzuschalten. Die Steuereinheit 9 kann darüber hinaus den Spannungssensor 11 auswerten und dient somit zur Diagnose der elektrischen Verbindung zwischen der Batterie und dem Starter in der Vorrichtung 1. Das Diagnoseergebnis wird vorzugsweise an die weiter unten erläuterte Diagnoserückmeldungseinheit 15 übermittelt. Der Stromsensor 19 ist insbesondere dann erforderlich, wenn eine aktive Begrenzung des Starterstroms durch eine entsprechende Regelung erfolgen soll. Die Regelung wird von der Steuereinheit 9 übernommen. Sofern eine passive Begrenzung des Starterstroms vorgesehen ist, kann der Stromsensor dennoch vorgesehen sein, um zusätzliche Informationen an die Steuereinheit 9 zu liefern.

Eingangsseitig kann die Vorrichtung 1 darüber hinaus noch einen zweiten Spannungssensor 21 aufweisen, der zwischen den ersten Anschluss 3 und die Steuereinheit 9 geschaltet ist. Der Spannungssensor 21 am Eingang der Vorrichtung 1 liefert eine Information an die Steuereinheit 9, die einen Rückschluss dahingehend zulässt, ob eine herkömmliche Autobatterie mit einem Spannungsbereich von 11 bis 14 Volt oder ein Jump Start mit bis zu 28 Volt vorliegt. Da Spannungswerte beim Jump Start unterschiedlich definiert werden, können diese sogar einen Spannungswert von 30V übersteigen. In Abhängigkeit von der Batteriespannung können dann unterschiedliche Maßnahmen von der Steuereinheit 9 eingeleitet werden, um einen Spannungseinbruch im Bordnetz zu vermeiden.

Weiterhin umfasst die Vorrichtung 1 einen Versorgungsspannungsgenerator 13, der sämtliche Komponenten der Vorrichtung 1 mit der benötigten Spannung versorgt. Der Versorgungsspannungsgenerator 13 ist dabei so ausgebildet, dass er auch einen tiefen Spannungseinbruch an den Klemmen der Fahrzeugbatterie B ausgleichen kann und die Komponenten der Vorrichtung 1 folglich zu jedem Zeitpunkt zuverlässig mit der benötigten Spannung versorgen kann. Der Versorgungsspannungsgenerator 13 bildet folglich eine interne Energiequelle bzw. einen internen Energiewandler, welche die Vorrichtung 1, und insbesondere den Startvorgangsdetektor 17, die Steuereinheit 9 und das Strombegrenzungsmodul 4 mit Energie versorgt, sodass das System unabhängig von externen Komponenten funktionsfähig ist.

Weiterhin kann die Vorrichtung 1 die Diagnoserückmeldungseinheit 15 aufweisen, die als Schnittstelle zur Übermittlung der Diagnoseergebnisse der Steuereinheit 9 an eine externe Einrichtung dient. Die Diagnoserückmeldungseinheit 15 dient also als Schnittstelle, über welche Fehlerinformationen an weitere Fahrzeugsteuergeräte geleitet werden. Die Diagnoserückmeldungseinheit 15 ist mit einem dritten Anschluss, nämlich dem Masseanschluss 17 verbunden und kann die Diagnoseergebnisse der Steuereinheit 9 weiterleiten, insbesondere die Erkennung eines Kurzschlusses auf dem Starterleitungsabschnitt 2b oder dem Batterieleitungsabschnitt 2a, eine Unterbrechung dieser Leitungen und/oder einen Startvorgang. Der Masseanschluss 17 kann auch direkt mit der Steuereinheit 9 oder einer anderen Komponente der Vorrichtung 1 verbunden sein, falls eine Diagnoserückmeldungseinheit 15 bei einer Ausführungsform der Vorrichtung 1 nicht vorgesehen ist.

Die Steuereinheit 9 dient insbesondere zur Einleitung einer Begrenzungsmaßnahme zur Begrenzung des Spannungseinbruchs an den Batterieklemmen, was in der gezeigten Ausführungsform durch eine Begrenzung des vom Starter benötigten Stroms (auch Starterstrom oder Ausgangsstrom genannt) bewerkstelligt wird. In der Figur weist die Vorrichtung 1 bzw. das Strombegrenzungsmodul 4 der Vorrichtung 1 einen Widerstand 23 auf, der zur passiven Begrenzung des Starterstroms seriell zwischen den ersten Anschluss 3 und den zweiten Anschluss schaltbar ist. Hierzu ist ein elektronisches oder mechanisches Schaltelement 24 vorgesehen, welches durch die Steuereinheit 9 angesteuert wird. Das Schaltelement 24 kann als Transistor, insbesondere als MOSFET oder dergleichen Schaltelement ausgebildet sein. Die Steuereinheit umfasst einen Steuerschaltkreis und kann insbesondere einen Mikroprozessor aufweisen.

Weiterhin ist ein Schalter 25 vorgesehen, der elektronisch oder mechanisch ausgebildet sein kann, und der eine direkte Verbindung zwischen dem Starterleitungsabschnitt 2b und dem Batterieleitungsabschnitt 2a zwischen den Anschlüssen 3 und 5 unterbrechen kann. Auch der Schalter 25 wird von der Steuereinheit 9 angesteuert. Bei einem geöffneten Schalter 25 und einem geschlossenen Schaltelement 24 wird der Strom in der Vorrichtung 1 von der Batterie B zum Starter S folglich über den Widerstand 23 umgeleitet, sodass ein Stromfluss effektiv reduziert wird. Sofern der Schalter 25 hingegen geschlossen und das Schaltelement 24 geöffnet ist, erfolgt ein Stromfluss auf direktem Wege von der Batterie B zu dem Starter S über den Starterleitungsabschnitt 2b und den Batterieleitungsabschnitt 2a.

Bei der in der Figur gezeigten Ausführungsform der Vorrichtung 1 mit einem Strombegrenzungsmodul 4, welches den Stromfluss mittels eines Widerstands 23 begrenzt, ist der Stromsensor 19 nicht zwingend notwendig. Jedoch können seine erfassten Messdaten als zusätzliche Informationen an die Steuereinheit 9 weitergeleitet und von dieser verarbeitet werden. Andererseits kann alternativ oder zusätzlich eine aktive Stromregelung vorgesehen sein, bei welcher der Widerstand 23 nicht in dem Strombegrenzungsmodul 4 vorgesehen sein muss. In diesem Fall erfolgt eine aktive Regelung des Starterstroms durch die Steuerung mit Hilfe des Stromsensors 19, beispielsweise nach Art einer DC/DC-Wandlung.

Im Folgenden wird die Funktion der erfindungsgemäßen Vorrichtung 1 näher erläutert. Sobald der Startvorgangdetektor 17 einen Startvorgang detektiert (Schaltelement 24 geöffnet, Schalter 25 geschlossen), erzeugt er ein entsprechendes Signal und leitet dieses an die Steuereinheit 9 weiter. Der Startvorgangdetektor 17 aktiviert folglich die Steuereinheit 9; mit anderen Worten wird die Steuereinheit 9 durch das (vorzugsweise digitale) Signal des Startvorgangdetektors 17 aufgeweckt. Die Steuereinheit 9 steuert daraufhin das Strombegrenzungsmodul 4 an und aktiviert folglich einen passiven oder aktiven Strombegrenzungsmechanismus, welcher den Stromfluss von der Batterie zu dem Starter sofort begrenzt (Schaltelement 24 geschlossen, Schalter 25 geöffnet). Dadurch wird der Spannungseinbruch an den Batterieklemmen und damit ein Spannungseinbruch im gesamten Bordnetz zuverlässig verhindert oder zumindest auf einen bestimmten akzeptablen minimalen Spannungswert begrenzt.

Wie gesagt kann je nach Art der vorgesehenen Strombegrenzungsmaßnahme (passiv oder aktiv) entweder ein serieller Widerstand 23 für eine bestimmte Zeit zuschaltet werden (passive Begrenzung) oder es erfolgt eine aktive Strombegrenzung beispielsweise mittels einer DC/DC-Wandlung zur Regelung des Starterstroms.

Die Vorrichtung 1 überwacht permanent und ohne die Notwendigkeit eines externen Aktivierungssignals den Starter und vorzugsweise auch den Batteriestatus, sofern ein Spannungssensor vorgesehen ist. Die Vorrichtung 1 erkennt durch den integrierten Startvorgangdetektor 17 automatisch, d.h. ohne auf ein externes Aktivierungssignal angewiesen zu sein, dass ein Startvorgang vorliegt und folglich ein Spannungseinbruch im Bordnetz bevorsteht. Sie beginnt daraufhin unmittelbar mit der Einleitung einer Spannungseinbruch-Begrenzungsmaßnahme.

Üblicherweise sind Steuergeräte in Kraftfahrzeugen so ausgelegt, dass sie Spannungseinbrüche an den Batterieklemmen bis zu 9 V überstehen und bis zu diesem Spannungsniveau korrekt arbeiten. Neue Batterien ermöglichen zwar höhere Starterströme mit kleineren Spannungseinbrüchen, jedoch benötigen neu entwickelte Starter wesentlich mehr Strom aus der Fahrzeugbatterie, was durch die Notwendigkeit bedingt ist, den Startvorgang zu beschleunigen (bei Start-Stopp-Betrieb im Stadtverkehr). Dies führt wiederum zu tieferen Spannungseinbrüchen an den Batterieklemmen und damit im Bordnetz. In neueren Fahrzeugen kommen jedoch häufig auch ältere, weniger spannungsfeste Steuergeräte zum Einsatz, was die bisherige Forderung an die nicht zu überschreitende Tiefe des Spannungseinbruchs in jedem Fall aufrechterhält. Vorzugsweise kann ein Spannungseinbruch an den Batterieklemmen auf ca. 9 V begrenzt werden. Jedoch ist es denkbar, diese Untergrenze noch tiefer zu definieren.

Die Vorrichtung zur automatischen Stabilisierung eines Kraftfahrzeug-Bordnetzes gemäß der vorliegenden Erfindung kann nicht nur bei Start/Stopp-Systemen in Kraftfahrzeugen zum Einsatz kommen. Vielmehr schont die Vorrichtung gemäß der vorliegenden Erfindung auch bei Fahrzeugen ohne Start/Stopp-Automatik die Bordelektronik und im Übrigen auch die Fahrzeugbatterie. Geringfügige, vom Fahrer nicht oder kaum wahrnehmbare Verzögerungen des Startvorgangs, können hierbei in Kauf genommen werden.

Insgesamt ermöglicht die erfindungsgemäße Vorrichtung zur Stabilisierung eines Kraftfahrzeug-Bordnetzes bei einem Startvorgang eine automatische Erkennung des Startvorgangs und ermöglicht somit die unmittelbare Einleitung von Maßnahmen zur Spannungseinbruchbegrenzung. Somit kann auf ein externes Steuersignal verzichtet werden, welches einen Spannungseinbruch im Bordnetz mitteilt. Ein bevorstehender Spannungseinbruch kann folglich nahezu ohne Zeitverzögerung erkannt und zuverlässig begrenzt werden, so dass einerseits die Fahrzeugbatterie und andererseits die Fahrzeugelektronik geschont wird.

### Bezugszeichenliste

- 1: Vorrichtung zur Stabilisierung eines Kraftfahrzeug-Bordnetzes
- 2a: Batterieleitungsabschnitt
- 2b: Starterleitungsabschnitt
- 3: erster Anschluss
- 4: Strombegrenzungsmodul
- 5: zweiter Anschluss
- 9: Steuereinheit
- 11: Spannungssensor
- 13: Versorgungsspannungsgenerator
- 15: Diagnoserückmeldungseinheit
- 17: Masseanschluss
- 19: Stromsensor
- 21: Spannungssensor
- 23: Widerstand
- 25: Schalter
- B: Batterie
- S: Starter
- L_{B}: Leitung
- L_{S}: Leitung

## Patentansprüche

1. Vorrichtung (1) zur Spannungseinbruch-Stabilisierung in einem Kraftfahrzeug, aufweisend:
- einen ersten Anschluss (3) zur Verbindung der Vorrichtung (1) mit einer Energiequelle, insbesondere mit einer Fahrzeugbatterie (B);
- einen zweiten Anschluss (5) zur Verbindung der Vorrichtung (1) mit einer Startvorrichtung (S) eines Kraftfahrzeugs;
- ein Strombegrenzungsmodul (4) zur Begrenzung eines Starterstroms;
- eine Steuereinheit (9) zur Ansteuerung des Strombegrenzungsmoduls (4), und
- mindestens einen mit der Steuereinheit (9) verbundenen Startvorgangdetektor (17) zur Erkennung eines Startvorgangs,
wobei die Steuereinheit (9) aufgrund eines Startvorgangsignals des Startvorgangdetektors (17) das Strombegrenzungsmodul (4) veranlasst, eine Starterstrombegrenzungsmaßnahme durchzuführen.

2. Vorrichtung nach Anspruch 1,
**dadurch gekennzeichnet, dass**
der erste Anschluss (3) und der zweite Anschluss (5) einen Batterieleitungsabschnitt (2a) und einen Starterleitungsabschnitt (2b) miteinander verbunden sind.

3. Vorrichtung nach Anspruch 2,
**dadurch gekennzeichnet, dass**
der Batterieleitungsabschnitt (2a) mit dem Starterleitungsabschnitt (2b) über das Strombegrenzungsmodul (4) miteinander verbunden ist.

4. Vorrichtung nach einem der vorhergehenden Ansprüche,
**dadurch gekennzeichnet,dass**
ein Spannungssensor (21) zur Erkennung des Spannungsniveaus der Fahrzeugbatterie (B) vorgesehen ist.

5. Vorrichtung nach einem der vorhergehenden Ansprüche,
**dadurch gekennzeichnet, dass**
ein Versorgungsspannungsgenerator (13) zur Spannungsversorgung der Vorrichtungskomponenten vorgesehen ist.

6. Vorrichtung nach einem der vorhergehenden Ansprüche,
**dadurch gekennzeichnet, dass**
eine mit der Steuereinheit (9) verbundene Diagnoseeinheit (15) zur Erkennung eines Kurzschlusses und/oder einer Unterbrechung der Starterleitung (7) vorgesehen ist.

7. Vorrichtung nach einem der vorhergehenden Ansprüche,
**dadurch gekennzeichnet, dass**
die Diagnoseeinheit (15) mit einem Masseanschluss (17) verbunden ist.

8. Vorrichtung nach einem der vorhergehenden Ansprüche,
**dadurch gekennzeichnet, dass**
die Spannungseinbruch-Begrenzungsmaßnahme eine passive Begrenzung des Starterstroms durch Zuschaltung eines Widerstands (23) umfasst.

9. Vorrichtung nach einem der vorhergehenden Ansprüche,
**dadurch gekennzeichnet, dass**
die Spannungseinbruch-Begrenzungsmaßnahme eine Begrenzung des Starterstroms durch eine aktive Regelung des Starterstroms umfasst.

10. Vorrichtung nach einem der vorhergehenden Ansprüche,
**dadurch gekennzeichnet, dass**
ein Spannungseinbruch auf 9 V begrenzt wird.

11. Vorrichtung nach einem der vorhergehenden Ansprüche,
**dadurch gekennzeichnet, dass**
ein mit der Steuereinheit (9) verbundener Stromsensor (19), insbesondere zur geregelten Begrenzung des Starterstroms, vorgesehen ist.

12. Vorrichtung nach einem der vorhergehenden Ansprüche,
**dadurch gekennzeichnet, dass**
ein Widerstand (23) zur Starterstrombegrenzung zwischen den ersten Anschluss (3) und den zweiten Anschluss (5), insbesondere mittels eines Schaltelements (24), schaltbar ist.

13. Kraftfahrzeug aufweisend eine Vorrichtung (1) zur Stabilisierung eines Kraftfahrzeug-Bordnetzes während eines Startvorgangs nach einem der Ansprüche 1 bis 11.

14. Kraftfahrzeug nach Anspruch 12,
**dadurch gekennzeichnet, dass**
die Vorrichtung (1) zwischen die Fahrzeugbatterie (B) und die Startervorrichtung (S) geschaltet ist.

15. Kraftfahrzeug nach Anspruch 12 oder 13,
**dadurch gekennzeichnet, dass**
die Vorrichtung (1) an der Fahrzeugbatterie (B) oder an der Startvorrichtung (S) angebracht ist.

## Geänderte Patentansprüche

### Geänderte Patentansprüche gemäss Regel 137(2) EPÜ.

**1.** Vorrichtung (1) zur Spannungseinbruch-Stabilisierung in einem Kraftfahrzeug, in einem Gehäuse aufweisend:
- einen ersten Anschluss (3) zur Verbindung der Vorrichtung (1) mit einer Energiequelle, insbesondere mit einer Fahrzeugbatterie (B);
- einen zweiten Anschluss (5) zur Verbindung der Vorrichtung (1) mit einer Startvorrichtung (S) eines Kraftfahrzeugs;
- ein Strombegrenzungsmodul (4) zur Begrenzung eines Starterstroms;
- eine Steuereinheit (9) zur Ansteuerung des Strombegrenzungsmoduls (4), und
- mindestens einen mit der Steuereinheit (9) verbundenen integrierten Startvorgangdetektor (17) zur Erkennung eines Startvorgangs, wobei die Steuereinheit (9) aufgrund eines Startvorgangsignals des Startvorgangdetektors (17) das Strombegrenzungsmodul (4) veranlasst, eine Starterstrombegrenzungsmaßnahme durchzuführen.

**2.** Vorrichtung nach Anspruch 1,
**dadurch gekennzeichnet, dass**
der erste Anschluss (3) und der zweite Anschluss (5) einen Batterieleitungsabschnitt (2a) und einen Starterleitungsabschnitt (2b) miteinander verbunden sind.

**3.** Vorrichtung nach Anspruch 2,
**dadurch gekennzeichnet, dass**
der Batterieleitungsabschnitt (2a) mit dem Starterleitungsabschnitt (2b) über das Strombegrenzungsmodul (4) miteinander verbunden ist.

**4.** Vorrichtung nach einem der vorhergehenden Ansprüche,
**dadurch gekennzeichnet, dass**
ein Spannungssensor (21) zur Erkennung des Spannungsniveaus der Fahrzeugbatterie (B) vorgesehen ist.

**5.** Vorrichtung nach einem der vorhergehenden Ansprüche,
**dadurch gekennzeichnet, dass**
ein Versorgungsspannungsgenerator (13) zur Spannungsversorgung der Vorrichtungskomponenten vorgesehen ist.

**6.** Vorrichtung nach einem der vorhergehenden Ansprüche,
**dadurch gekennzeichnet, dass**
eine mit der Steuereinheit (9) verbundene Diagnoseeinheit (15) zur Erkennung eines Kurzschlusses und/oder einer Unterbrechung der Starterleitung (7) vorgesehen ist.

**7.** Vorrichtung nach einem der vorhergehenden Ansprüche,
**dadurch gekennzeichnet, dass**
die Diagnoseeinheit (15) mit einem Masseanschluss (17) verbunden ist.

**8.** Vorrichtung nach einem der vorhergehenden Ansprüche,
**dadurch gekennzeichnet, dass**
die Spannungseinbruch-Begrenzungsmaßnahme eine passive Begrenzung des Starterstroms durch Zuschaltung eines Widerstands (23) umfasst.

**9.** Vorrichtung nach einem der vorhergehenden Ansprüche,
**dadurch gekennzeichnet, dass**
die Spannungseinbruch-Begrenzungsmaßnahme eine Begrenzung des Starterstroms durch eine aktive Regelung des Starterstroms umfasst.

**10.** Vorrichtung nach einem der vorhergehenden Ansprüche,
**dadurch gekennzeichnet, dass**
ein Spannungseinbruch auf 9 V begrenzt wird.

**11.** Vorrichtung nach einem der vorhergehenden Ansprüche,
**dadurch gekennzeichnet, dass**
ein mit der Steuereinheit (9) verbundener Stromsensor (19), insbesondere zur geregelten Begrenzung des Starterstroms, vorgesehen ist.

**12.** Vorrichtung nach einem der vorhergehenden Ansprüche,
**dadurch gekennzeichnet, dass**
ein Widerstand (23) zur Starterstrombegrenzung zwischen den ersten Anschluss (3) und den zweiten Anschluss (5), insbesondere mittels eines Schaltelements (24), schaltbar ist.

**13.** Kraftfahrzeug aufweisend eine Vorrichtung (1) zur Stabilisierung eines Kraftfahrzeug-Bordnetzes während eines Startvorgangs nach einem der Ansprüche 1 bis 11.

**14.** Kraftfahrzeug nach Anspruch 12,
**dadurch gekennzeichnet, dass**
die Vorrichtung (1) zwischen die Fahrzeugbatterie (B) und die Startervorrichtung (S) geschaltet ist.

**15.** Kraftfahrzeug nach Anspruch 12 oder 13,
**dadurch gekennzeichnet, dass**
die Vorrichtung (1) an der Fahrzeugbatterie (B) oder an der Startvorrichtung (S) angebracht ist.
